# EUROPÄISCHE PATENTSCHRIFT

(11) **EP 0 660 942 B1**
(45) Veröffentlichungstag und Bekanntmachung des Hinweises auf die Patenterteilung: **30.09.1998**
(21) Anmeldenummer: 94920398.8
(22) Anmeldetag: 11.07.1994
(51) Int. Cl.: G02B 21/02, G02B 7/10

(54) **MIKROSKOPOBJEKTIV MIT EINER KORREKTURFASSUNG**
MICROSCOPE OBJECTIVE WITH A CORRECTING MOUNT
OBJECTIF DE MICROSCOPE POURVU D'UNE MONTURE DE CORRECTION

(30) Priorität: 15.07.1993 DE 4323721
(43) Veröffentlichungstag der Anmeldung: 05.07.1995
(73) Patentinhaber: LEICA MIKROSKOPIE UND SYSTEME GmbH, D-35530 Wetzlar (DE)
(72) Erfinder: BENDER, Reinhold, D-35606 Solms (DE)
(74) Vertreter: Stamer, Harald, Dipl.-Phys.
(86) Internationale Anmeldenummer: DE9400794
(87) Internationale Veröffentlichungsnummer: WO9502842

(56) Entgegenhaltungen:
- DE-A- 3 735 324
- DE-A- 3 812 745
- DE-B- 1 037 719
- DE-C- 800 443
- US-A- 2 533 371
- US-A- 4 059 342
- US-A- 4 666 256

## Beschreibung

Die Erfindung betrifft ein Mikroskopobjektiv mit wenigstens einer Korrekturfassung gemäß dem Oberbegriff des Anspruchs 1.

Aus der DE 38 12 745 A1 ist ein Mikroskopobjektiv zur Einstellung auf unterschiedliche Deckglasdicken bekannt, das vier Linsengruppen aufweist, von denen die zweite und die vierte Linsengruppe verschiebbar sind, wobei beide gegenläufig zueinander bewegt werden. Die Fassung dieses Objektivs besitzt einen äußeren, gehäusefesten Ring, in den ein weiterer feststehender Ring eingeschraubt ist, welcher ein Innengewinde für einen dort drehbar angeschraubten Zwischenring aufweist. Dieser ist mit einem Nocken versehen, der in eine Ausnehmung eines um den feststehenden Ring drehbaren Betätigungsring eingreift. Der drehbare Zwischenring trägt zwei spiralförmige Nuten mit gegenläufiger und unterschiedlich steiler Steigung. In diese Nuten greifen einmal ein an der Fassung für das vierte Linsenglied befestigter Nocken sowie ein an der Schiebefassung für die zweite Linsengruppe angeschraubter Nocken ein. Diese Nocken greifen außerdem durch axiale Schlitze in einem Fassungsring sowie durch eine darumgelegte Trägerhülse, die neben der Fassung für die Frontlinsengruppe auch alle anderen Linsenfassungen aufnimmt. Mittels eines Nockens ist die Trägerhülse gegen Verdrehung gesichert, sodaß sich die Linsenglieder beim Drehen des Betätigungsringes axial verschieben, aber nicht mitdrehen.

Aus der DE 37 35 324 A1 ist weiterhin ein Mikroskopobjektiv mit einer Korrekturvorrichtung insbesondere für unterschiedlich dicke planparallele Platten im Objektraum bekannt, das nur eine verschiebbare Frontlinsengruppe zur Bildfehlerkorrektur aufweist, wobei gleichzeitig eine Schärfeebenenkorrektur durch axiale Verschiebung des gesamten optischen Systems vorgenommen wird. Dazu besteht dieses aus zwei beweglichen Linsengruppen, von denen die Frontlinsengruppe über ein Bewegungsgewinde mittels eines Betätigungsringes relativ zur zweiten Linsengruppe axial verschoben wird, während beide Linsengruppen in einem Gleitrohr mittels desselben Betätigungsringes relativ zu einem feststehenden Rohr gemeinsam verschoben werden.

Diesen bekannten Mikroskopobjektiven mit Korrekturvorrichtungen ist das axiale Verschieben einer oder auch mehrerer Linsengruppen zum Ausgleich unterschiedlicher Deckglasdicken gemeinsam. Ein Verschieben einer Korrekturfassung innerhalb eines zylindrischen Fassungsringes in ausschließlich axialer Richtung führt indessen zu Verkippungen der Korrekturfassung um die optische Achse, wenn deren Höhe im Verhältnis zum Innendurchmesser des Fassungsringes gering ist, d.h. weniger als das 0,6-fache dieses Durchmessers beträgt. Im Extremfall, also bei Fassungsringen großen Durchmessers und Korrekturfassungen geringer Höhe sind Verklemmungen derselben nicht auszuschließen.

Der Erfindung liegt die Aufgabe zugrunde, ein Mikroskopobjektiv mit einer Korrekturfassung der eingangs genannten Art so auszubilden, daß beim Verschieben der Korrekturfassung innerhalb des Fassungsringes keinerlei Verkippungen auftreten.

Diese Aufgabe wird erfindungsgemäß durch die kennzeichnenden Merkmale des Anspruchs 1 gelöst. Vorteilhafte Ausführungsformen der Erfindung sind Gegenstand der Ansprüche 2 und 3.

In der nachfolgenden Beschreibung von drei in der Zeichnung schematisch dargestellten Ausführungsbeispielen ist die Erfindung näher erläutert. Gleiche Bauteile sind dabei mit denselben Bezugszeichen versehen.

Es zeigen:
- Fig.1: einen Teillängsschnitt eines erfindungsgemäßen Objektivs mit einer Korrekturfassung im vergrößerten Maßstab,
- Fig.2: einen Teillängsschnitt einer weiteren Ausführungsform mit einer Korrekturfassung und
- Fig.3: einen Teillängsschnitt einer Ausführungsform mit zwei Korrekturfassungen.

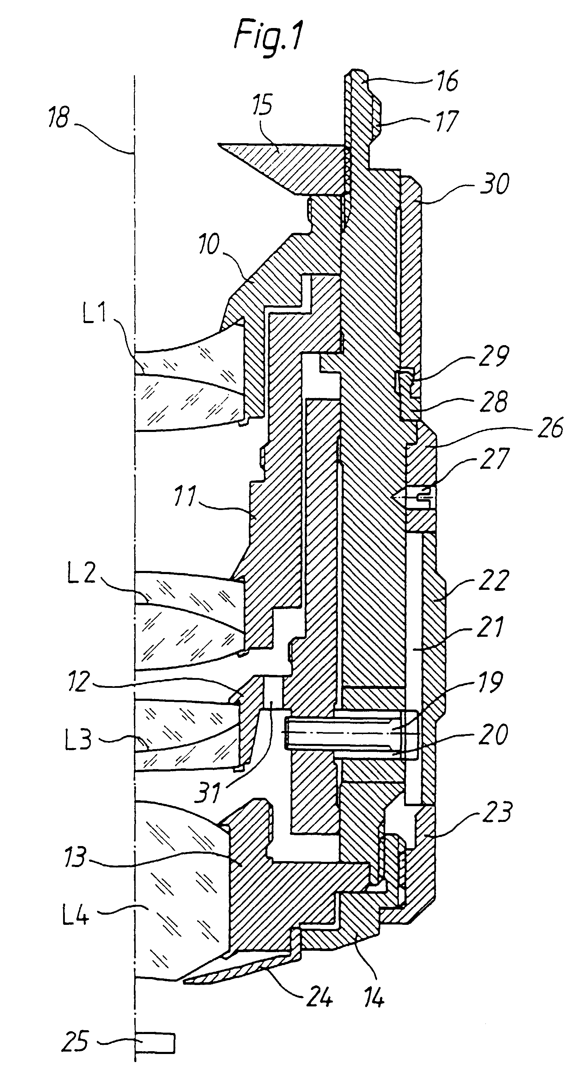

Das in Fig.1 gezeigte Objektiv hat einen Abbildungsmaßstab von 20x, eine numerische Apertur von 0,40 und weist vier Linsengruppen L₁ - L₄ auf, welche in Fassungen 10, 11, 12, 13 befestigt sind. Die Fassungen 10, 11 und 13 sind mittels zweier Ringe 14 und 15 fest mit einem zylindrischen Fassungsträger 16 verbunden, der ein Anschraubgewinde 17 zur Befestigung des Objektivs aufweist. Die Linsengrupe L₃ wird von einer Korrekturfassung 12 gehalten, in die senkrecht zur optischen Achse 18 ein Zapfen 19 eingeschraubt ist. Der Zapfen 19 liegt mit seinem Mittelabschnitt auf einer Kurvennut 20 des Fassungsträgers 16 auf und greift mit seinem anderen Ende in eine zur optischen Achse 18 parallele Innennut 21 eines Rändelringes 22 ein. Dieser wird in axialer Richtung von einem mit dem Ring 14 verschraubten Abschlußring 23 gehalten. Mit 24 ist eine Kappe bezeichnet, die die Frontlinse schützt. Der Rändelring 22 dient außer der Verschiebung der Korrekturfassung 12 auch zum Befestigen und Lösen des Objektivs an einem hier nicht gezeigten Revolver. Der Einstellung des Rändelringes 22 auf eine bestimmte Dicke eines Deckglases 25 dient ein Einstellring 26, der mittels einer Schraube 27 am Fassungträger 16 fixiert wird. Oberhalb des Einstellringes 26 ist ein Kennring 28 für die gewählte Vergrößerung angeordnet, an dem mittels einer Schnappverbindung 29 eine Hülse 30 hefestigt ist, die die Kenndaten des Objektivs trägt.

Beim Betätigen des Rändelringes 22 läuft der Zapfen 19 auf der Kurvennut 20 des Fassungsträgers 16 und verschiebt die Korrekturfassung 12 zusammen mit der Linsengruppe L₃ in axialer Richtung. Gleichzeitig werden beide aufgrund des Eingriffs des Zapfens 19 in die Innennut 21 des Rändelringes 22 um die optische Achse 18 gedreht. Auf diese Weise erfolgt eine äußerst gleichmäßige und klemmfreie Verschiebung der Korrekturfassung 12 innerhalb des Fassungsträgers 16. Eine Bohrung 31 in der Korrekturfassung 12 dient dem Luftdurchtritt beim Verschieben derselben. Das vorstehend beschriebene Objektiv ermöglicht eine Korrektur der Deckglasdicke von 0-2 mm.

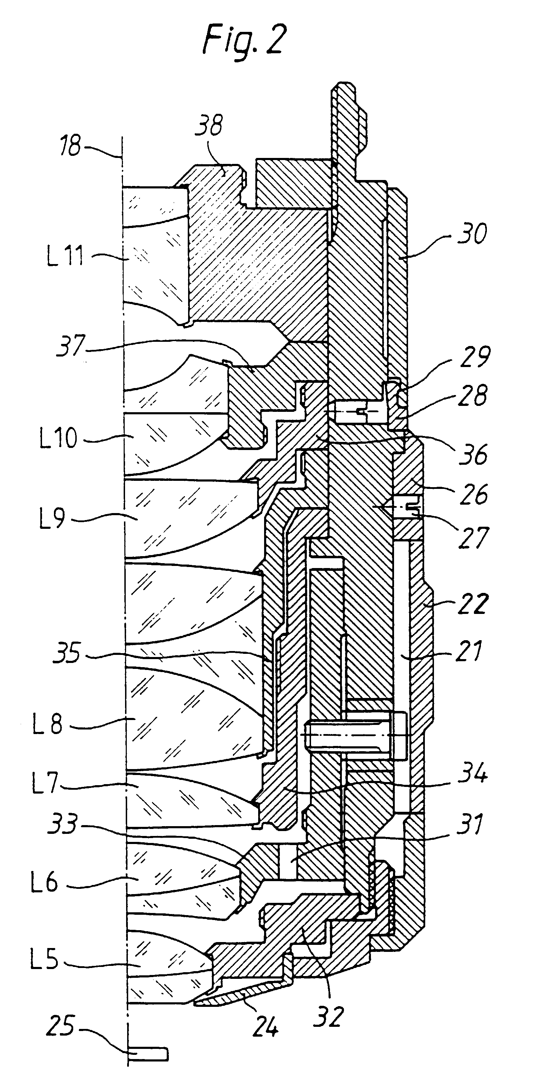

Das in Fig.2 gezeigte Objektiv hat einen Abbildungsmaßstab von 63x, eine numerische Apertur von 0,70 und weist sieben Linsengruppen L₅ - L₁₁ in entsprechenden Fassungen 32-38 auf. Mit diesem Objektiv sind Deckglaskorrekturen von 0,1-1,3 mm möglich. Bei einem Vergleich mit dem Objektiv gemäß Fig.1 ist zu erkennen, daß die Bauteile 21, 22, 26, 27, 28, 29 und 30 gleich sind, wodurch sich geringere Fertigungkosten ergeben. Bei diesem Objektiv ist eine Korrekturfassung 33 mit der Linsengruppe L₆ mittels des Rändelringes 22 gleichzeitig axial verschiebbar und um die optische Achse 18 drehbar. Da die Funktion derjenigen des Objektivs von Fig.1 entspricht, wurde auf die Wiedergabe weiterer Bezugszeichen verzichtet.

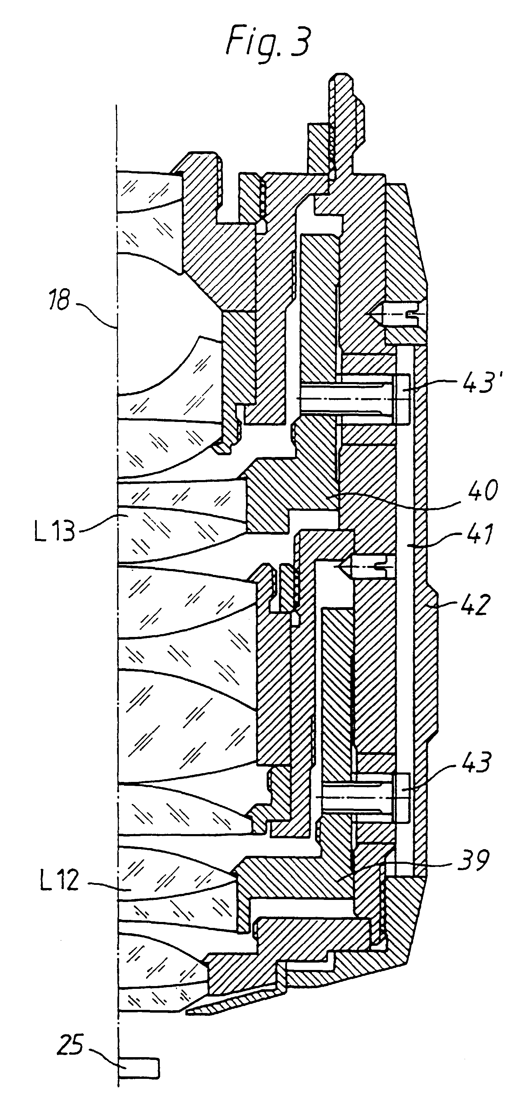

Die in Fig.3 dargestellte Ausführungsform eines Objektivs weist zwei Korrekturfassungen 39,40 auf, welche Linsengruppen L₁₂, L₁₃ tragen. Die axiale Verschiebung derselben ist wiederum mit einer Drehung um die optische Achse 18 gekoppelt. In die Nut 41 des Rändelringes 42 greifen dazu zwei Zapfen 43,43' ein, die mit den Korrekturfassungen 39,40 verschraubt sind.

Die erfindungsgemäßen Mikroskopobjektive zeichnen sich außerdem durch ein vergleichsweise günstiges Verhältnis von Durchmesser zu Höhe aus. Aufgrund dieser schlanken Bauweise sind sie für Mikroskope mit bauartbedingt beschränkten Platzverhältnissen wie beispielsweise umgekehrte Mikroskope besonders geeignet.

## Patentansprüche

1. Mikroskopobjektiv mit wenigstens einer Korrekturfassung zur Anpassung an unterschiedliche Deckglasdicken, wobei die Korrekturfassung eine Linsengruppe trägt und zwischen feststehenden Fassungen axial verschiebbar ist, **dadurch gekennzeichnet**, daß die axiale Verschiebung der Korrekturfassung (12) mit einer radialen Drehung derselben um die optische Achse (18) des Objektivs gekoppelt ist, wobei zur axialen Verschiebung und zur gleichzeitigen radialen Drehung der Korrekturfassung (12) ein auf einer Kurvennut (20) eines Fassungsträgers (16) bewegbarer Zapfen (19) dient, der mit einem Ende fest mit der Korrekturfassung (12) verbunden ist und mit dem anderen Ende in einen drehbaren Ring (22) eingreift.

2. Mikroskopobjektiv nach Anspruch 1, **dadurch gekennzeichnet**, daß zur axialen Verschiebung und zur gleichzeitigen radialen Drehung der Korrekturfassung (12) ein mittels eines Rändelringes (22) auf einer Kurvennut (20) eines Fassungsträgers (16) bewegbarer Zapfen (19) senkrecht zur optischen Achse (18) des Objektivs angeordnet ist, dessen eines Ende fest mit der Korrekturfassung (12) verbunden ist und dessen anderes Ende in eine zur optischen Achse (18) des Objektivs parallele Innennut (21) des Rändelringes (22) eingreift.

3. Mikroskopobjektiv nach Anspruch 1, **dadurch gekennzeichnet**, daß zwei axial verschiebbare und gleichzeitig drehbare Korrekturfassungen (39,40) vorgesehen sind.

## Claims

1. Microscope objective with at least one correction mount for adaptation to different cover slip thicknesses, wherein the correction mount carries a lens group and is axially displaceable between stationary mounts, characterised thereby that the axial displacement of the correction mount (12) is coupled with a radial rotation of the same about the optical axis (18) of the objective, wherein a pin (19), which is movable along a cam groove (20) of a mount carrier (16) and which is fixedly connected by one end with the correction mount (12) and engages by the other end in a rotatable ring (22), serves for the axial displacement and for the simultaneous radial rotation of the correction mount (12).

2. Microscope objective according to claim 1, characterised thereby that for the axial displacement and for the simultaneous radial rotation of the correction mount (12) a pin (19), which is movable by means of a knurled ring (22) along a cam groove (20) of a mount carrier (16), is arranged perpendicularly to the optical axis (18) of the objective, one end of which pin is fixedly connected with the correction mount (12) and the other end of which pin engages in an inner groove (21), which is parallel to the optical axis (18) of the objective, of the knurled ring (22)

3. Microscope objective according to claim 1, characterised thereby that two axially displaceable and simultaneously rotatable correction mounts (39, 40) are provided.

## Revendications

1. Objectif de microscope avec au moins une monture de correction pour l'adaptation à diverses épaisseurs d'une lamelle couvre-objet, où la monture de correction porte un groupe de lentilles et est axialement mobile entre des montures stationnaires caractérisées en ce que le déplacement axial de la monture de correction 12 est coupée à une rotation radiale de celle-ci autour de l'axe optique (18) de l'objectif, pour le déplacement axial et pour la rotation radiale simultanée de la monture de correction (12), on utilise un tourillon (19) mobile dans une rainure courbe (20) d'un support de monture (16), qui est relié solidement à une extrémité à la monture de correction (12) et qui par son autre extrémité insère dans une bague rotative (22).

2. Objectif de microscope selon la revendication 1, caractérisé en ce que pour le déplacement axial et la rotation radiale simultanée de la monture de correction (12), un tourillon mobile (19) est agencé perpendiculairement à l'axe optique (18) de l'objectif, lequel est mobile au moyen d'une bague molletée (22) sur une rainure courbe (20) d'un support de monture, dont une extrémité est reliée solidement à la monture de correction (12) et dont l'autre extrémité s'insère dans une rainure interne (21) de la bague molletée (22) parallèle à l'axe optique (18) de l'objectif.

3. Objectif de microscope selon la revendication 1, caractérisé en ce que deux montures de correction (39, 40) sont prévues qui sont déplaçables axialement et simultanément rotatives.
